# EUROPÄISCHE PATENTSCHRIFT

(11) **EP 0 832 383 B1**
(45) Veröffentlichungstag und Bekanntmachung des Hinweises auf die Patenterteilung: **30.07.2003**
(21) Anmeldenummer: 96914043.3
(22) Anmeldetag: 04.06.1996
(51) Int. Cl.: F16J 15/26

(54) **DICHTUNGSANORDNUNG**
SEALING ARRANGEMENT
DISPOSITIF D'ETANCHEITE

(30) Priorität: 14.06.1995 EP 95810401
(43) Veröffentlichungstag der Anmeldung: 01.04.1998
(73) Patentinhaber: Burckhardt Compression AG, 8404 Winterthur (CH)
(72) Erfinder: FEISTEL, Norbert, CH-8408 Winterthur (CH)
(74) Vertreter: Dr. Graf & Partner
(86) Internationale Anmeldenummer: CH9600215
(87) Internationale Veröffentlichungsnummer: WO97000396

(56) Entgegenhaltungen:
- CH-A- 439 897
- DE-C- 4 201 246
- DE-U- 7 318 583
- FR-A- 2 678 039
- GB-A- 278 564
- US-A- 1 391 845

## Beschreibung

Die Erfindung betrifft eine Dichtungsanordnung gemäss dem Oberbegriff von Anspruch 1. Eine derartige Dichtungsanordnung ist bereits aus der FR-A-2 678 039 bekannt.

Dichtungsanordnungen für einen im Querschnitt kreisförmigen Körper wie einer Kolbenstange sind insbesondere bei Kolbenkompressoren bekannt. Trockenlaufende Kolbenkompressoren sind Maschinen, die im Verdichtungsteil ohne jede Fremdschmierung auskommen. Solche Kompressoren weisen feststehende Dichtungsanordnungen auf, an denen eine Kolbenstange vorbeibewegt wird. Dabei sind die Dichtungsanordnungen üblicherweise in einer Reihenschaltung hintereinander angeordnet und bilden derart eine sogenannte Packung. Ein derartige Packung mit Dichtungsanordnungen und Dichtungsringen ist aus der CH 439 897 bekannt. Dichtungsringe erfahren an der Dichtfläche, die an der Kolbenstange anliegt, einen Verschleiss. Um trotzdem über längere Zeit eine Dichtheit aufrecht zu erhalten, weist der bekannte Dichtungsring einen Verschleissausgleich auf, indem der Dichtungsring in drei Dichtungsringelemente aufgelöst ist mit in bezug auf die Kolbenstange parallel zu einer Tangente verlaufenden Teilfugen und mit einen Ausgleichsringspalt bildenden Radialfugen. Eine den Dichtungsring umfangsumfassende Schlauchfeder bewirkt auf die Dichtungsringelemente eine gegen die Kolbenstange hin wirkende Vorspannung. Diese bekannte Dichtungsanordnung weist den Nachteil auf, dass der Dichtungsring eine grosse Anzahl von Teilfugen aufweist, welche die Dichtwirkung beeinträchtigen. Um diese Fugen abzudichten wird neben dem Dichtungsring ein in axialer Richtung anliegender Deckring angeordnet. Eine solche Dichtungsanordnung weist den Nachteil auf, dass sie eine relativ lange Ausdehnung in axialer Richtung aufweist.

Eine weitere Dichtungsanordnung mit zwei nebeneinanderliegend angeordneten Dichtungsringen ist aus der Druckschrift FR-A-2 678 039 bekannt. Ein bekanntes Problem solcher Dichtungsanordnungen an Kolbenstangen ist die entstehende Reibungswärme. Eine Abfuhr der Reibungswärme über die Dichtungsanordnung selbst ist nur schwerlich möglich, da die Dichtungsanordnung üblicherweise aus Kunststoff ausgebildet sind und thermisch nahezu als Isolator wirken. Der grösste Teil der Reibungswärme wird daher auf eine deutlich weniger effiziente Weise über die Kolbenstange abgeführt. Die auftretende Reibungswärme führt unter anderem bei der Verwendung von Dichtringen aus Kunststoff zu einem hohen Verschleiss. Daher ist oft eine aufwendige Kühlung der die Dichtungsanordnung haltende Packung erforderlich.

Es ist Aufgabe der vorliegenden Erfindung, die Nachteile bekannter Dichtungsanordnungen zu überwinden.

Diese Aufgabe wird gelöst gemäss den Merkmalen von Anspruch 1. Die Unteransprüche 2 bis 9 beziehen sich auf weitere vorteilhafte Ausführungsformen.

Die erfindungsgemässe Dichtungsanordnung für eine Kolbenstange mit einem kreisförmigen Querschnitt umfasst einen einteiligen Dichtungsring mit einem Stoss und Ausgleichsspiel sowie einen den Dichtungsring in Umfangsrichtung umfassenden oder umschliessenden Deckring, wobei der Dichtungsring an mindestens einem Ende einen Abschnitt aufweist, welcher zusammen mit dem anderen Ende des Dichtungsrings eine überlappende Stossstelle ausbildet, und wobei der Dichtungsring eine zur Teilung bzw. zur Stossstelle hin abnehmende radiale Wandstärke aufweist.

Ein Vorteil der erfindungsgemässen Dichtungsanordnung ist darin zu sehen, dass der überlappende Stoss in axialer Richtung eine hohe Gasdichtigkeit bewirkt. Der umfassende bzw. umschliessende Deckring unterstützt die Dichtwirkung und bewirkt auf den Dichtungsring zudem eine gegen die Kolbenstange hin wirkende Vorspannung. Der umfassende bzw. umschliessende Deckring dichtet den überlappenden Stoss in radialer Richtung.

Als Material für den Dichtungsring eignen sich Kunststoffe für Trockenlaufanwendungen wie gefüllte Polymere mit einer Matrix aus Polythetrafluorethylen (PTFE) oder eine Mischung von mechanisch festen, hochtemperaturbeständigen und verschleissfesten Polymeren, die auch als "Hochtemperatur-Polymere" bezeichnet werden, wie Polyetheretherketon(PEEK), Polyetherketon(PEK), Polyimid (PI), Polyphenylensulfid (PPS), Polybenzimidazol (PBI), Polyamidimid (PAI) oder auch Epoxidharz. Die Hochtemperatur-Polymere sind in reiner Form nicht trockenlauffähig und benötigen daher zusätzliche Festschmierstoffe wie Kohle, Graphit, Molybdänsulfid, PTFE usw. Solche Hochtemperatur-Polymere werden dann als "modifizert" bezeichnet.

Ein Vorteil der erfindungsgemässen Dichtungsanordnung ist darin zu sehen, dass insbesondere ein Dichtungsring gefertigt aus einem Hochtemperatur-Polymer verwendbar ist.

Der Begriff "Hochtemperatur-Polymer" dient in Zusammenhang mit dem Einsatz von Dichtungselementen in Kolbenkompressoren als Sammelbegriff für Kunststoffe, welche sich von den gängigen gefüllten PTFE-Materialen durch folgende Eigenschaften unterscheiden:
- Hochtemperatur-Polymere weisen eine hohe mechanische Festigkeit auch bei den im Trockenlauf üblichen hohen Temperaturen auf.
- Hochtemperatur-Polymere weisen keine Kaltflusseigenschaften auf, weshalb auch fein gestaltete Dichtungsringe formstabil bleiben und insbesondere beim Einsatz in einer Packung auch bei hohen Drücken keinen zusätzlichen Stützring benötigen.
- Hochtemperatur-Polymere weisen ein erheblich höheres Elastizitäts-Modul auf, was bei grösseren Ringabmessungen eines Dichtungsringes zu einer hohen Steifigkeit führt.
- Mit Hochtemperatur-Polymeren lassen sich Dichtringe herstellen, die, im Vergleich zu gefülltem PTFE, eine deutlich kleinere Abmessung aufweisen und dennoch eine wesentlich höhere mechanische Belastbarkeit aufweisen, so dass solche aus Hochtemperatur-Polymeren gefertige Dichtungsringe insbesondere für den Einsatz bei hohen Verdichtungsenddrücken geeignet sind.

Ein bisheriger Nachteil bei der Verwendung von Hochtemperatur-Polymeren war darin zu sehen, dass das schlechte Formanpassungsvermögen ein vollständiges Anliegen eines Dichtungsringes über den gesamten Umfang einer Kolbenstange erschwerte, sodass sich Undichtigkeiten ergaben.

Der erfindungsgemässe Dichtungsring weist den Vorteil auf, dass der Dichtungsring eine zur Teilung bzw. zur Stossstelle hin abnehmende radiale Wandstärke aufweist, das heisst, dass der Dichtungsring im Bereich des überlappenden Stosses etwas dünner und damit biegeweicher ausgeführt ist. Durch diese Ausgestaltung weist ein Dichtungsring bestehend aus Hochtemperatur-Polymeren ein gutes Formanpassungsvermögen auf.

Die erfindungsgemässe Dichtungsanördnung eignet sich insbesondere für trockenlaufende Ringkolben-Kompressoren, wobei der Dichtungsring vorzugsweise aus einem modifizierten Hochtemperatur-Polymer mit sogenannten selbstschmierenden Eigenschaften besteht. Ein solcher Dichtungsring lässt sich als ein sehr schmaler Ring herstellen, so dass die Kolbenstange einerseits die Wärme über Strahlungswärme besser an die Packung überträgt und dass andererseits eine kleinere Reibungsfläche zwischen Dichtungsring und Kolbenstange besteht, was die Erwärmung reduziert. Somit kann eine zu hohe Erwärmung der Kolbenstange verhindert werden, was zudem den Vorteil aufweist, dass der Dichtungsring einen reduzierten Verschleiss aufweist.

Die erfindungsgemässe Dichtanordnung weist eine hohe Dichtheit auf, sodass über die Dichtanordnung nur eine geringe Leckage erfolgt und die Leckage vorwiegend zwischen der Kolbenstange und der Dichtfläche des Dichtungsrings erfolgt. Dabei entsteht eine Gaslagerung zwischen der Kolbenstange und der Dichtfläche, was die Erzeugung von Wärme und somit eine Erwärmung der Kolbenstange sowie einen Verschleiss des Dichtungsrings zusätzlich reduziert.

In den folgenden Figuren werden verschiedene Ausführungsbeispiele der Erfindung beschrieben. Es zeigen:
- Fig. 1: eine perspektivische Ansicht einer Dichtungsanordnung;
- Fig. 2: eine Aufsicht eines Dichtungsrings;
- Fig. 3: eine Untenansicht des Dichtungsrings;
- Fig. 4: einen Querschnitt durch den Dichtungsring;
- Fig. 4a: einen weiteren Querschnitt durch einen Dichtungsring entlang der Linie (B-B);
- Fig. 4b: einen weiteren Querschnitt durch den Dichtungsring gemäss Fig. 4a entlang der Linie (C-C);
- Fig. 5: einen weiteren Querschnitt durch einen Dichtungsring;
- Fig. 6: eine Aufsicht auf einen Deckring;
- Fig. 7: eine Aufsicht eines weiteren Ausführungsbeispiels eines Dichtungsringes;
- Fig. 7a: eine Seitenansicht des Dichtungsringes gemäss Fig. 2 aus Richtung E;
- Fig. 7b: eine Seitenansicht des Dichtungsringes gemäss Fig. 7 aus Richtung E;
- Fig. 8: einen Längsschnitt durch eine Trockenlaufdichtungsanordnung.

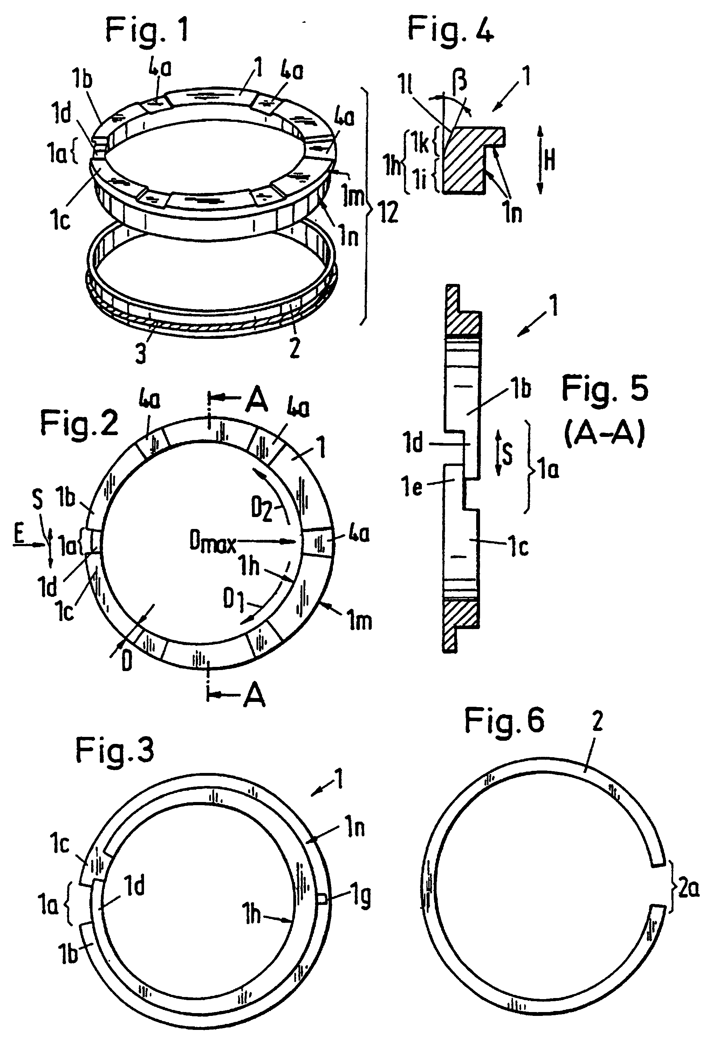

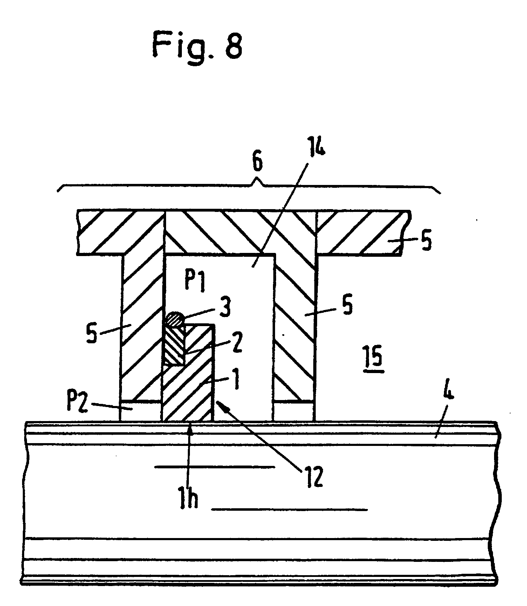

Fig. 1 zeigt in einer Explosionszeichung eine Dichtungsanordnung 12, bestehend aus einem Dichtungsring 1, einem in Umfangsrichtung des Dichtungsrings 1 über diesen anordbaren Deckring 2 sowie eine den Deckring 2 in Umfangsrichtung umspannende Schlauchfeder 3. Die in Fig. 2 dargestellte Aufsicht des Dichtungsringes 1 weist eine entlang dem Innenkreis kreisförmig verlaufende Fläche 1h auf, welche dem abzudichtenden Körper, einer Kolbenstange 4, zugewandt ist und eine Dichtfunktion ausübt. Der Dichtungsring 1 ist als ein einteiliger Ring mit einer Teilung 1a ausgestaltet, sodass der Dichtungsring in zwei Enden 1b, 1c ausläuft. Das Ende 1c ist derart ausgestaltet, dass es, wie aus der Untenansicht des Dichtungsrings gemäss Fig. 3 ersichtlich, einen in Umfangsrichtung des Dichtungsrings 1 verlaufenden Abschnitt 1d aufweist, welcher zusammen mit dem anderen Ende 1b eine in Umfangsrichtung überlappende Stossstelle ausbildet. Der Dichtungsring 1 weist elastische Eigenschaften auf, sodass er im Bereich der Teilung 1a ein Spiel S aufweist. Im vorliegenden Ausführungsbeispiel ist der Dichtungsring 1 derart ausgestaltet, dass dessen radiale Wandstärke D ausgehend von der der Teilung 1a gegenüberliegenden Stelle Dmax zur Teilung 1a hin, das heiss in Richtung D1 oder D2, kontinuierlich abnimmt. Dadurch weist auch ein Dichtungsring, der aus einem Material mit einem höheren Elastizitäts-Modul wie zum Beispiel einem Hochtemperatur-Polymer gefertigt ist, zur Teilung 1a hin ein zunehmend elastischeres bzw. biegeweicheres Verhalten auf. Der den Dichtungsring 1 umgebende Deckring 2 mit Schlauchfeder 3 bewirkt auf den Dichtungsring 1 eine gegen die Kolbenstange hin wirkende Kraft. Der Deckring 2 ist als ein offener Ring ausgestaltet. Durch das Spiel S an der Teilung 1a sowie das elastische Verhalten gegen die Teilung 1a hin weist der Dichtungsring 1 ein gutes Formanpassungsvermögen an die Kolbenstange 4 auf, sodass der Dichtungsring 1 die Kolbenstange 4 über deren gesamten Umfang dichtend umschliesst. Der Dichtungsring 1 weist eine radial gegen aussen weisende, kreisförmig verlaufende Fläche 1m,1n auf. Im dargestellten Ausführungsbeispiel ist der Verlauf der beiden Flächen 1h, im derart gegenseitig angeordnet, dass sie exzentrisch zueinander verlaufen. Der Dichtungsring 1 weist fünf in radialer Richtung verlaufende Rückströmnuten 4a bzw. Druckentlastungsnuten 4a auf. Diese Rückströmnuten 4a ermöglichen (z.B. Fig. 8), dass ein in der Packungsringkammer 14 eingeschlossenes Gas während eines Saughubes des Zylinders in den Zylinder zurückströmt, sodass eine doppelwirkende Dichtfunktion des Dichtelementes 1, d.h. eine Dichtfunktion sowohl während der Saugphase als auch während der Verdichtungsphase des Zylinders, verhindert wird. Es ist auch möglich einen Dichtungsring 1 ohne Rückströmnuten 4a auszuführen. Rückströmnuten können zum Beispiel statt dessen in den metallischen Boden des Kammerringes 5 eingefräst sein.

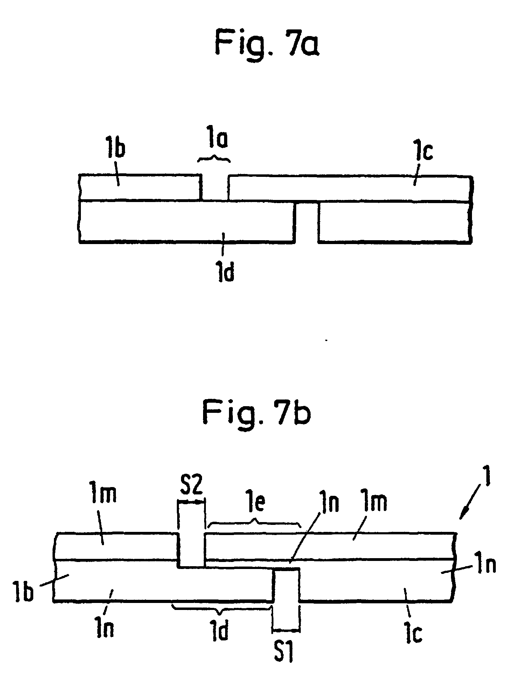

Fig. 6 zeigt ein Ausführungsbeispiel eines offenen Deckringes 2, welcher einen sektorförmigen Ausschnitt 2a aufweist. Der Dichtungsring 1 weist ein zylinderförmiges, vorstehendes Haltemittel 1g auf, welches bei auf den Dichtungsring 1 aufgesetztem Deckring 2 in den Ausschnitt 2a zu liegen kommt, sodass der Deckring 2 gegenüber einem Verdrehen im Umfangsrichtung der Dichtungsanordnung 12 gesichert ist.

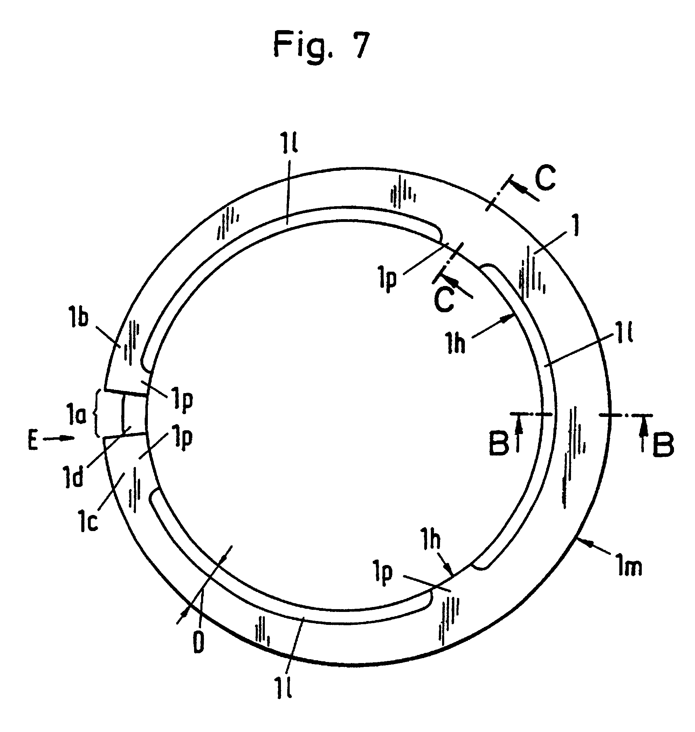

Fig. 7a zeigt eine Seitenansicht des Dichtungsringes gemäss Fig. 2 aus Richtung E. Die Stossstelle des Dichtungsringes 1 weist die beiden Enden 1b, 1c auf, wobei das Ende 1b den in Umfangsrichtung verlaufenden Endabschnitt 1d aufweist, sodass sich eine in Umfangsrichtung überlappende Stossstelle mit einer Teilung 1a ergibt.

Fig. 5 zeigt einen Schnitt durch einen Dichtungsring 1 entlang der Linie (A-A) gemäss Fig. 2, wobei die Teilung 1a im Vergleich zur Ausführung gemäss den Figuren 1 bis 3 unterschiedlich ausgestaltet ist. An jedem Ende 1b, 1c des Dichtungsrings 1 sind in Umfangsrichtung des Dichtungsrings 1 verlaufende Endabschnitte 1d, 1e angeordnet, die sich in Umfangsrichtung überlappen und derart eine überlappende Stossstelle ausbilden. Die Teilung 1a weist wiederum ein Spiel S auf. Die Seitenansicht Fig. 7b des Dichtungsringes 1 entspricht einer Ausführungsform gemäss Fig. 5 unter einer Sicht aus Richtung E. Der Dichtungsring 1 läuft in die beiden Enden 1b,1c aus, welche in Umfangsrichtung überlappende Endabschnitte 1d, 1e aufweisen. Zwischen den Enden 1b, 1c ergibt sich eine Zwischenraum der Breite S1 bzw. S2. In einer bevorzugten Ausführungsform sind beite Breiten S1,S2 gleich gross ausgestaltet, sodass der Dichtungsring 1 in Umfangsrichtung ein Spiel S=S1=S2 aufweist. Der Deckring 2 kommt in die Ausnehmung 1n zu liegen, wobei die Ausnehmung 1n derart breit ausgestaltet ist, dass sich die Ausnehmung in in Umfangsrichtung auch über den Endabschnitt 1e erstreckt, sodass der Deckring 2 im Bereich der Ausnehmung 1n den Endabschnitt 1e umschliesst. Eine derartige Dichtungsanordnung 12 weist eine hohe Dichtheit auf, da der Deckring 2 den Zwischenraum mit der Breite S1 als auch den Spalt zwischen den Endabschnitten 1d,1e umschliesst, was eine hohe Dichtigkeit in radialer Richtung bewirkt. Zudem wird eine gegenseitige Relativbewegung der beiden Endabschnitte 1d,1e in radialer Richtung verhindert.

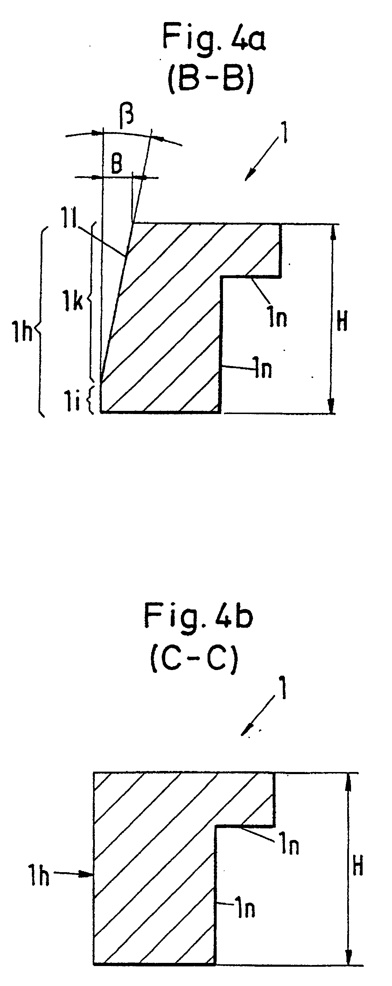

Fig. 4 zeigt einen Schnitt durch einen Dichtungsring 1 entlang der Linie A-A gemäss Fig. 2 mit einer weiteren Gestaltungsmöglichkeit des Querschnittes. Der Dichtungsring 1 weist eine zu einer Gleitfläche einer Kolbenstange 4 hin orientierte Fläche 1h auf. Diese Fläche 1h weist in axialer Richtung eine Höhe H auf und ist über einen Teil 1i zylindrisch verlaufend ausgestaltet, um eine Dichtfläche 1i zu bilden und über einen weiteren Teil 1k sich erweiternd ausgestaltet. Die sich erweiternde Fläche 1l kann z. B. konisch unter einem Winkel β verlaufend ausgestaltet sein.

Die erfindungsgemässe Dichtungsanordnung 12 weist eine ausgezeichnete Dichtwirkung auf, da sowohl in axialer wie auch in radialer Richtung eine Durchströmung verhindert wird. Somit entweichen Gasanteile vorwiegend zwischen der Dichtfläche 1i und der Gleitfläche der Kolbenstange 4, was den Vorteil aufweist, dass der Dichtungsring 1 leicht von der Gleitfläche abgehoben wird, und somit die Reibung reduziert wird. Die sich erweiternde Fläche 1l bewirkt, dass die Gasanteile ungehindert in Richtung der reduzierten Dichtfläche 1i strömen, wobei die Gasanteile sowohl auf die Fläche 1l als auch auf die Fläche 1i eine in radialer Richtung nach aussen wirkende Kraft auf den Dichtungsring 1 ausüben. Somit wird eine Leckage zwischen der Dichtfläche 1i und der Gleitfläche einer Kolbenstange 4 begünstigt, wodurch eine Gaslagerung zwischen Dichtungsring 1 und Kolbenstange 4 entsteht. Die Dichtfläche 1i kann in ihrer axialen Ausdehnung relativ schmal ausgestaltet sein, um eine ausgeprägte Gaslagerung zu bewirken. Dadurch lässt sich die Reibung zwischen der Dichtfläche 1i und der Kolbenstange 4 reduzieren, was den Vorteil aufweist, dass sich sowohl die Erwärmung als auch der Verschleiss des Dichtungsringes 1 reduziert. Der Dichtungsring 1 weist eine Ausnehmung in zur Aufnahme des Deckringes 2 auf. Diese Ausnehmung 1n kann auch andersartig ausgestaltet sein oder nicht vorhanden sein.

Fig. 8 zeigt einen Längsschnitt durch eine Trockenlaufdichtungsanordnung beziehungsweise einer sogenannten Packung 6. Dazu gehört zumindest eine die Kolbenstange 4 umgebende Dichtungskammer 14, die aus zwei Kammerringen 5 gebildet wird, und die zu dem zugeordneten Zylinderraum 15 hin dichtend verschraubt sind. In der Dichtungskammer 14 ist eine zweiteilige Dichtungsringscheibe 12 angeordnet, umfassend einen Dichtungsring 1 sowie einen Deckring 2. Zudem umspannt eine Schlauchfeder 3 den Deckring 2. Auf Grund der Dichtfunktion des Ringes 1 ist der Druck P1 in der Dichtungskammer 14 grösser als der Druck P2 in der Durchtrittsöffnung zur nachfolgenden Dichtungskammer 14.

Im Unterschied zur Ausführungsform gemäss Fig. 2 weist das in Fig. 7 dargestellte Ausführungsbeispiel eines Dichtungsringes 1 eine Fläche 1h mit einer konusförmig verlaufenden Teilfläche 1l auf. Die Teilfläche 1l ist an drei Stellen unterbrochen durch einen Steg 1p. Es kann sich als vorteilhaft erweisen auch mehr als drei Stege 1p über den Umfang verteilt anzuordnen. Fig. 4a zeigt einen Schnitt durch den Dichtungsring 1 entlang der Linie B-B und zeigt die konusförig verlaufende Teilfläche 1l, welche sich in axialer Richtung über eine Breite 1k erstreckt, sowie die zylindrisch verlaufende Teilfläche 1i. Die konusförmig verlaufende Teilfläche 1l trifft unter einem Winkel β auf die Oberfläche der Welle 4. Fig. 4b zeigt einen Schnitt durch einen Steg 1p des Dichtungsrings 1 entlang der Linie C-C. Ein Steg 1p ist derart ausgebildet, dass die Innenfläche 1h in axialer Richtung eine Breite entsprechend der Breite H des Dichtungsringes 1 auf und parallel zur Oberfläche der Welle 4 verläuft. Ein Steg 1p liegt über der ganzen Breite H auf der Welle 4 auf und dient zur Stabilisierung des Dichtungsringes 1. Das Ausführungsbeispiel gemäss Fig. 7 weist drei über dem Umfang der Fläche 1h verteilt angeordnete Stege 1p auf, wobei ein Steg 1p im Bereich der Teilung 1a angeordnet ist. Ein Dichtungsring 1b kann natürlich auch ohne Stege 1p ausgestaltet sein, sodass sich die konische Teilfläche 1l ohne Unterbruch über den gesamten Umfang der Fläche 1h erstreckt.

Die konisch verlaufende Teilfläche 1l weist gemäss Fig. 4a einen maximalen Abstand B zur Welle 4 auf. In einer Ausführungsform des Dichtungsringes 1 wird das Spiel S derart breit ausgestaltet, dass es eine Breite von "2 mal Pi mal B" aufweist. Ein derartig ausgestalteter Dichtungsring 1 bildet in einer ersten Betriebsphase ein Reibungsring und in einer zweiten Betriebsphase ein Strömungsring. In der ersten Betriebsphase weist der Dichtungsring 1 eine konisch verlaufende Teilfläche 1l auf. Mit zunehmendem Verschleiss an der Dichtfläche 1i wird die konisch verlaufende Teilfläche 1l zurückgebildet, bis sich die Dichtfläche 1i über die gesamte Breite H erstreckt. Wird nun das Spiel S entsprechend einer Breite von "2 mal Pi mal B" ausgestaltet, so wird das Spiel = Null sobald die Teilfläche 1l vollständig zurückgebildet ist. In diesem Zustand wird der Dichtungsring 1 zu einen Strömungsring, weil, da das Spiel = Null beträgt, kaum mehr ein Verschleiss der Dichtfläche 1i erfolgt, sodass der Dichtungsring 1 während der zweiten Betriebsphase eine ungefähr konstante Undichtigkeit aufweist. Der Dichtungsring 1 weist somit während der zweiten Betriebsphase einen maximalen Strömungswiderstand auf.

Die Teilfläche 1l ist nicht nur konusförmig verlaufend ausgestaltbar sondern kann jeden beliebigen Verlauf annehmen, derart, dass im Bereich der Teilfläche 1l zwischen der Welle 4 und dem Dichtungsring 1 ein Abstand entsteht.

## Patentansprüche

1. Dichtungsanordnung (12) für eine Kolbenstange mit einem kreisförmigen Querschnitt, umfassend einen Dichtungsring (1) mit einer Teilung (1a) und Ausgleichsspiel (S) und einer radial nach innen ausgerichteten Dichtfläche (1i), sowie einen den Dichtungsring (1) in Umfangsrichtung umschliessenden oder umfassenden Deckring (2), wobei der Dichtungsring (1) an mindestens einem Ende (1b) einen in Umfangsrichtung des Dichtungsrings (1) verlaufenden Abschnitt (1d, 1e) aufweist, welcher zusammen mit dem anderen Ende (1c) des Dichtungsrings (1) eine überlappende Stossstelle ausbildet, **dadurch gekennzeichnet, dass** der Dichtungsring (1) einteilig ausgestaltet ist, dass der Dichtungsring (1) einen L-förmigen Querschnitt aufweist, indem der Dichtungsring (1) an der radial nach aussen gerichteten Oberfläche eine Ausnehmung aufweist, welche entlang des Umfangs des Dichtungsrings (1) verläuft, dass der Deckring (2) in diese Ausnehmung passt, und dass der Dichtungsring (1) eine zur Teilung (1a) hin abnehmende radiale Wandstärke (D) aufweist.

2. Dichtungsanordnung (12) nach Anspruch 1, **dadurch gekennzeichnet, dass** der Dichtungsring (1) eine radial gegen innen zu einem abzudichtenden Körper hin gerichtete, kreisförmig verlaufende Fläche (1h) aufweist, und dass der Dichtungsring (1) radial gegen aussen eine in Umfangsrichtung des Dichtungsrings (1) kreisförmig und exzentrisch zur Fläche (1h) verlaufende Fläche (1m) aufweist.

3. Dichtungsanordnung (12) nach einem der Ansprüche 1 oder 2, **dadurch gekennzeichnet, dass** der Dichtungsring (1) ein Haltemittel (1g) aufweist, um ein gegenseitiges Verdrehen von Dichtungsring (1) und Deckring (2) zu unterbinden.

4. Dichtungsanordnung (12) nach einem der Ansprüche 1 bis 3, **dadurch gekennzeichnet, dass** der Deckring (2) elastisch federnde Eigenschaften aufweist und/oder von einer auf dem Deckring (2) aufliegenden, in Umfangsrichtung des Dichtungsringes (1) verlaufenden Feder (3) umgeben ist.

5. Dichtungsanordnung (12) nach einem der Ansprüche 1 bis 4, **dadurch gekennzeichnet, dass** der Dichtungsring (1) eine radial gegen innen zum abzudichtenden Körper hin gerichtete Fläche (1h) aufweisen, dass die Fläche (1h) in einer senkrecht zur Umfangsrichtung des Dichtrings (1) verlaufenden Richtung eine Höhe (H) aufweist, dass die Fläche (1h) über einen Teil der Höhe (H) zylinderförmig ausgestaltet ist, um eine Dichtfläche (1i) zu bilden, und über einen weiteren Teil (1k) eine Fläche (1l) mit einem bezüglich der Dichtfläche (1i) vergrösserten Radius aufweist.

6. Dichtungsanordnung (12) nach Anspruch 5, **dadurch gekennzeichnet, dass** die Fläche (1l) sich konisch erweiternd ausgestaltet ist.

7. Dichtungsanordnung (12) nach einem der Ansprüche 5 oder 6, **dadurch gekennzeichnet, dass** sich die Fläche (1l) in radialer Richtung um einen maximalen Abstand B erweitert, und dass das Ausgleichsspiel (S) eine Breite von "2 mal Π mal B" aufweist.

8. Dichtungsanordnung (12) nach einem der Ansprüche 5 bis 7, **dadurch gekennzeichnet, dass** entlang der Innenfläche (1h) in Umfangsrichtung verteilt eine Mehrzahl von Stege (1p) angeordnet sind.

9. Dichtungsanordnung (12) nach einem der Ansprüche 1 bis 8, **dadurch gekennzeichnet, dass** der Dichtungsring (1) aus Kunststoff wie Polytetrafluorethylen (PTFE), einem modifizierten Hochtemperatur-Polymer wie Polyetheretherketon (PEEK), Polyetherketon (PEK), Polyimid (PI), Polyphenylensulfid (PPS), Polybenzimidazol (PBI), Polyamidimid (PAI) gefertigt ist.

10. Packung zum Abdichten einer Kolbenstange mit Dichtungsanordnungen (12) nach einem der Ansprüche 1 bis 9.

11. Kolbenkompressor mit einer Dichtungsanordnung (12) nach einem der Ansprüche 1 bis 9.

## Claims

1. Sealing arrangement (12) for a piston rod with a circular cross-section, comprising a sealing ring (1) with a parting joint (1a) and compensation clearance (S) and a radially inwardly oriented sealing surface (1i), as well as a cover ring (2) surrounding or enclosing the sealing ring (1) in the peripheral direction, with the sealing ring (1) having a section (1d, 1e) which extends in the peripheral direction of the sealing ring (1) at least at one end (1b) and forms an overlapping ring joint together with the other end (1c) of the sealing ring (1), **characterised in that** the sealing ring (1) being a one-piece ring, that the sealing ring (1) having a L-shaped cross-section, **in that** the sealing ring (1) having a recess at the radially outwardly oriented surface, which proceeds along the periphery of the sealing ring (1), that the cover ring (2) fits in this recess, and that the sealing ring (1) having a radial wall thickness (D) which decreases towards the parting joint (1a).

2. Sealing arrangement (12) in accordance with claim 1 **characterised in that** the sealing ring (1) has a circularly extending surface (1h) oriented radially inwardly towards a body to be sealed; and **in that** the sealing ring (1) has a surface (1m) at its radially outer side extending circularly in the peripheral direction of the sealing ring (1) and eccentric to the surface (1h).

3. Sealing arrangement (12) in accordance with one of the claims 1 or 2 **characterised in that** the sealing ring (1) has a securing means (1g) in order to prevent a mutual rotation of the sealing ring (1) and the cover ring (2).

4. Sealing arrangement (12) in accordance with one of the claims 1 to 3 **characterised in that** the cover ring (2) has elastically resilient properties and/or is surrounded by a spring (3) lying on the cover ring (2) and extending in the peripheral direction of the sealing ring (1).

5. Sealing arrangement (12) in accordance with one of the claims 1 to 4 **characterised in that** the sealing ring (1) has a surface (1h) oriented radially inwardly towards the body to be sealed; **in that** the surface (1h) has a height (H) in a direction extending perpendicular to the peripheral direction of the sealing ring (1); **in that** the surface (1h) is of cylindrical shape over a portion of the height (H) in order to form a sealing surface (1i) and has a surface (1l) with a radius enlarged with respect to the sealing surface (1i) over a further part (1k).

6. Sealing arrangement (12) in accordance with claim 5 **characterised in that** the surface (1l) is made conically divergent.

7. Sealing arrangement (12) in accordance with one of the claims 5 or 6 **characterised in that** the surface (1l) diverges in the radial direction by a maximum distance B; and **in that** the compensatory clearance (S) has a width of "2 times π times B".

8. Sealing arrangement (12) in accordance with one of the claims 5 to 7 **characterised in that** a plurality of webs (1p) is arranged distributed along the inner surface (1h) in the peripheral direction.

9. Sealing arrangement (12) in accordance with one of the claims 1 to 8 **characterised in that** the sealing ring (1) is manufactured of a plastic such as polytetrafluoroethylene (PTFE) or of a modified high-temperature polymer such as poly(ether ether ketone) (PEEK), poly(ether ketone) (PEK), polyimide (PI), poly(phenylene sulphide) (PPS), polybenzimidazole (PBI), or polyamideimide (PAI).

10. Packing for sealing a piston rod with sealing arrangements (12) in accordance with one of the claims 1 to 9.

11. Piston compressor with a sealing arrangement (12) in accordance with one of the claims 1 to 9.

## Revendications

1. Dispositif d'étanchéité (12) pour une tige de piston d'une section transversale circulaire, comprenant une bague d'étanchéité (1) avec une division (1a) et un jeu de compensation (S) et une face d'étanchéité (1i) orientée radialement vers l'intérieur, ainsi qu'une bague de recouvrement (2) renfermant ou entourant la bague d'étanchéité (1) dans la direction périphérique, où la bague d'étanchéité (1) présente à au moins une extrémité (1b) un tronçon (1d, 1e) s'étendant dans la direction périphérique de la bague d'étanchéité (1) qui forme ensemble avec l'autre extrémité (1c) de la bague d'étanchéité (1) un emplacement de joint à recouvrement, **caractérisé en ce que** la bague d'étanchéité (1) est réalisée en une pièce, **en ce que** la bague d'étanchéité (1) présente une section transversale en forme de L, **en ce que** la bague d'étanchéité (1) présente à la surface orientée radialement vers l'extérieur un évidement qui s'étend le long du pourtour de la bague d'étanchéité (1), **en ce que** la bague de recouvrement (2) s'adapte dans cet évidement et **en ce que** la bague d'étanchéité (1) présente une épaisseur de paroi radiale (D) diminuant vers la division (1a).

2. Dispositif d'étanchéité (12) selon la revendication 1, **caractérisé en ce que** la bague d'étanchéité (1) présente une face (1h) dirigée radialement vers l'intérieur, vers un corps à rendre étanche, s'étendant d'une manière circulaire, et **en ce que** la bague d'étanchéité (1) présente radialement vers l'extérieur une face (1m) s'étendant d'une manière circulaire dans la direction périphérique de la bague d'étanchéité (1) et excentrique à la face (1h).

3. Dispositif d'étanchéité (12) selon l'une des revendications 1 ou 2, **caractérisé en ce que** la bague d'étanchéité (1) présente un moyen de retenue (1g) pour empêcher une rotation mutuelle de la bague d'étanchéité (1) et de la bague de recouvrement (2).

4. Dispositif d'étanchéité (12) selon l'une des revendications 1 à 3, **caractérisé en ce que** la bague de recouvrement (2) présente des caractéristiques élastiques et/ou est entourée par un ressort (3) reposant sur la bague de recouvrement (2), s'étendant dans la direction périphérique de la bague d'étanchéité (1).

5. Dispositif d'étanchéité (12) selon l'une des revendications 1 à 4, **caractérisé en ce que** la bague d'étanchéité (1) présente une face (1h) dirigée radialement vers l'intérieur, vers le corps à rendre étanche, **en ce que** la face (1h) présente dans une direction s'étendant perpendiculairement à la direction périphérique de la bague d'étanchéité (1) une hauteur (H), **en ce que** la face (1h) est réalisée en une forme cylindrique sur une partie de la hauteur (H) pour former une face d'étanchéité (1i) et présente sur une autre partie (1k) une face (1l) d'un rayon agrandi par rapport à la face d'étanchéité (1i).

6. Dispositif d'étanchéité (12) selon la revendication 5, **caractérisé en ce que** la face (1l) est réalisée pour s'élargir de manière conique.

7. Dispositif d'étanchéité (12) selon l'une des revendications 5 ou 6, **caractérisé en ce que** la face (1l) s'élargit dans la direction radiale d'un écart maximal B, et **en ce que** le jeu de compensation (S) a une largeur de "2 fois Π fois B".

8. Dispositif d'étanchéité (12) selon l'une des revendications 5 à 7, **caractérisé en ce que** plusieurs nervures (1p) sont disposées le long de la face intérieure (1h) en étant réparties dans la direction périphérique.

9. Dispositif d'étanchéité (12) selon l'une des revendications 1 à 8, **caractérisé en ce que** la bague d'étanchéité (1) est réalisée en un matériau synthétique, comme en polytétrafluoroéthylène (PTFE), un polymère haute température modifié comme en polyétheréthercétone (PEEK), en polyéthercétone (PEK), en polyimide (PI), en sulfure de polyphénylène (PPS), en polybenzimidazol (PBI), en polyamidimide (PAI).

10. Garniture pour rendre étanche une tige de piston avec des dispositifs d'étanchéité (12) selon l'une des revendications 1 à 9.

11. Compresseur à piston avec un dispositif d'étanchéité (12) selon l'une des revendications 1 à 9.
